# EUROPEAN PATENT APPLICATION

(11) **EP 4 528 862 A1**
(43) Date of publication of application: **26.03.2025**
(21) Application number: 23807592.3
(22) Date of filing: 15.05.2023
(51) Int. Cl.: H01M 8/1058, C25B 13/08, H01M 8/10, H01M 8/1023, H01M 8/106

(54) **PORE FILLING MEMBRANE, FUEL CELL, AND ELECTROLYSIS DEVICE**

(30) Priority: 19.05.2022 JP 2022082500
(71) Applicant: Institute of Science Tokyo, Tokyo 152-8550 (JP); Nippon Kayaku Kabushiki Kaisha, Tokyo 100-0005 (JP)
(72) Inventor: YAMAGUCHI, Takeo, Tokyo 152-8550 (JP); MIYANISHI, Shoji, Tokyo 152-8550 (JP); OKUYAMA, Hiroto, Tokyo 152-8550 (JP)
(74) Representative: Oak & Fox
(86) International application number: PCT/JP2023/018040
(87) International publication number: WO 2023/223990

(57) **Abstract**

A pore-filling membrane having excellent chemical durability and mechanical strength, a fuel cell including the pore-filling membrane and having excellent durability, and an electrolysis device are provided. The pore-filling membrane has a porous base material and a polyarylene polymer, in which the polyarylene polymer is filled into pores of the porous base material.

## Description

### Technical Field

The present disclosure relates to a pore-filling membrane, a fuel cell, and an electrolysis device.

### Background Art

Electrolyte membranes are used in various fuel cells, such as polymer electrolyte fuel cells and solid alkaline fuel cells, and in various electrolysis technologies, such as water electrolysis. The electrolyte membranes are required to have excellent ionic conductivity and durability to withstand long-term use.

The present inventors have disclosed certain polymers having no ethereal oxygen atoms in the main chain backbone as polymers with excellent chemical durability and ionic conductivity (for example, Patent Literatures 1 and 2).

### Citation List

### Patent Literature

Patent Literature 1: Japanese Unexamined Patent Application Publication No. 2018-135487
Patent Literature 2: Japanese Unexamined Patent Application Publication No. 2021-42351

### Summary of Invention

### Technical Problem

The polymers of Patent Literatures 1 and 2 can be deposited and used as electrolyte membranes. However, the mechanical strength of the polymer films was sometimes insufficient.

An object of the present disclosure is to provide a pore-filling membrane with excellent chemical durability and mechanical strength, a fuel cell having the pore-filling membrane and excellent durability, and an electrolysis device.

### Solution to Problem

The pore-filling membrane of the present disclosure has a porous base material and a polyarylene polymer, and the polyarylene polymer is filled into pores of the porous base material.

In one form of the pore-filling membrane, the polyarylene polymer has a structural unit represented by the following general formula (1): 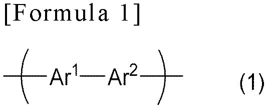
in which Ar¹ is an aromatic group having an ion exchange group, or a group in which aromatic rings having ion exchange groups are linked through a single bond, and a plurality of Ar¹s may be the same or different,
Ar² is an aromatic group having no ion exchange group, or a group in which two or more aromatic rings having no ion exchange group are linked through a single bond or a spiro atom, and a plurality of Ar²s may be the same or different, and
the aromatic rings of Ar¹ and the aromatic rings of Ar² are linked through a single bond.

In one form of the pore-filling membrane, the porous base material is a polyolefin porous base material.

In one form of the pore-filling membrane, the polyolefin porous base material is a polyethylene porous base material, a polypropylene porous base material, or a polytetrafluoroethylene porous base material.

The present disclosure also provides a fuel cell and an electrolysis device including the pore-filling membrane.

### Advantageous Effects of Invention

The present invention provides a pore-filling membrane with excellent chemical durability and mechanical strength, a fuel cell including the pore-filling membrane and having excellent durability, and an electrolysis device.

### Brief Description of Drawings

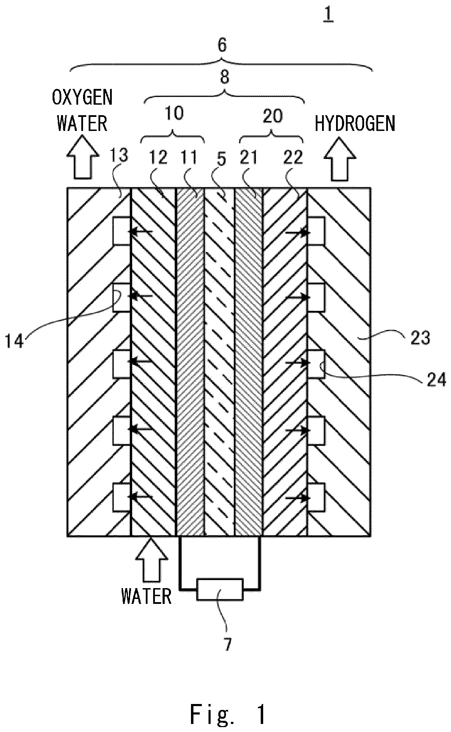

[Fig. 1] Fig. 1 is a schematic cross-sectional view illustrating an example of a key part of an electrolysis device.
[Fig. 2] Fig. 2 is a schematic cross-sectional view illustrating an example of an anode catalyst.
[Fig. 3] Fig. 3 is a schematic cross-sectional view illustrating an example of an anode catalyst.
[Fig. 4] Fig. 4 is a schematic cross-sectional view illustrating an example of a cathode catalyst.
[Fig. 5] Fig. 5 is a schematic cross-sectional view illustrating an example of a key part of a fuel cell.
[Fig. 6] Fig. 6 is a graph showing the results of the water electrolysis test of Example 1.
[Fig. 7A] Fig. 7A is Raman spectra of the inside of the pore-filling membrane and the like, of Example 1.
[Fig. 7B] Fig. 7B is Raman spectrum of the inside of the pore-filling membrane of Example 1.

### Description of Embodiments

The pore-filling membrane, fuel cell, and electrolysis device will be described below.

The expression "polymer(s)" in the present disclosure includes "copolymer(s)" unless otherwise specified.

The expression "ion exchange group(s)" in the present disclosure refers to a functional group(s) having dissociation properties and capable of ion exchange.

The expression "to" indicating numerical ranges in the present disclosure means that the numerical values described before and after it are included as the lower and upper limits, unless otherwise specified.

For clarity of explanation, the following descriptions and drawings are simplified as appropriate. Furthermore, matters necessary for implementation not specifically mentioned herein may be understood as matters of design by those skilled in the art based on the related art in the field.

### [Pore-filling membrane]

The pore-filling membrane of the present disclosure has a porous base material and a polyarylene polymer, and the polyarylene polymer is filled into pores of the porous base material. This structure provides mechanical strength to the polyarylene polymer, which has excellent chemical durability.

### <Porous base material>

The porous base material used for the present pore-filling membrane is a base material having pores that can retain polyarylene polymer. It is preferable that at least some of the pores in the porous base material form through holes from the viewpoint of the improvement in ionic conductivity.

The form of the base material is preferably nonwoven fabric or porous film, and more preferably film in the form of porous film from the viewpoint of providing mechanical strength.

The porosity of the porous base material (= volume of voids/volume of bulk volume × 100 (%)) is preferably 30 to 95%, more preferably 40 to 80%, and even more preferably 45 to 70% to achieve both mechanical strength and ionic conductivity.

The film thickness of the porous base material is preferably 5 to 200 µm, more preferably 7 to 100 µm, and even more preferably 10 to 50 µm to achieve both mechanical strength and ionic conductivity.

From the viewpoint of filling and retaining polyarylene polymer and mechanical strength, the pore diameter of the porous base material is preferably 10 to 10,000 nm in average diameter, and more preferably 10 to 1,000 nm.

Polyolefin porous base material is preferred as the material of the porous base material, from the viewpoint of chemical durability, especially from the viewpoint of stability in alkali. The use of polyolefin porous base material also has the advantage that polyarylene polymers, especially high molecular weight polyarylene polymers with a weight average molecular weight of 100,000 or more, can be easily filled. Polyethylene porous base materials, polypropylene porous base materials, or polytetrafluoroethylene porous base materials are particularly preferred as the polyolefin porous base materials from the viewpoint of mechanical strength and chemical resistance. Ultra-high molecular weight polyethylene (e.g., weight average molecular weight of 1 million or more) porous base material is particularly preferred as the polyethylene porous base material.

### <Polyarylene polymer>

The present pore-filling membrane uses polyarylene polymer as the filling polymer. By using polyarylene polymer, a pore-filling membrane with excellent chemical durability can be obtained.

The polyarylene polymer is preferably a polymer having the structural unit represented by the following general formula (1) (hereinafter also referred to as polymer (A)) from the viewpoint of providing excellent ionic conductivity to the pore-filling membrane. 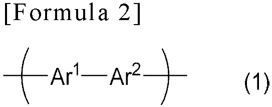
in which Ar¹ is an aromatic group having an ion exchange group, or a group in which aromatic rings having ion exchange groups are linked through a single bond, and a plurality of Ar¹s may be the same or different,
Ar² is an aromatic group having no ion exchange group, or a group in which two or more aromatic rings having no ion exchange group are linked through a single bond or a spiro atom, and a plurality of Ar²s may be the same or different, and
the aromatic rings of Ar¹ and the aromatic rings of Ar² are linked through a single bond.

Polymer (A) is a polymer having two or more of the above structural units (1), and has a structure in which Ar¹ having an ion exchange group and Ar² having no ion exchange group are alternately disposed. The aromatic group of Ar¹ and the aromatic group of Ar² are bonded by a single bond to form a main chain. There is no ethereal oxygen (-O-), sulfonyl (-S(=O)₂-), or carbonyl (-C(=O)-) skeleton in the main chain backbone, which results in excellent chemical durability, especially alkali durability. The aromatic ring here refers to the aromatic ring constituting the main chain, and the aromatic ring constituting the main chain may have additional aromatic rings as substituents. A distinction is made between aromatic rings constituting the main chain and aromatic rings as substituents (side chains).

Ar¹ is an aromatic group having an ion exchange group, or a group in which aromatic rings having ion exchange groups are linked through a single bond. The ion exchange group(s) refers to a functional group(s) having dissociation properties and capable of ion exchange.

When proton conductivity is given to polymer (A), acidic groups are preferred as ion exchange groups, and among acidic groups, sulfonic acid groups (-SO₃H groups), phosphoric acid groups (-H₂PO₄ groups), or carboxylic acid groups (-COOH groups) are preferred, and sulfonic acid groups are more preferred. The H of the above acidic group may be dissociated or substituted with alkali metal ions, alkaline earth metal ions and the like.

When anion conductivity is given to polymer (A), quaternary ammonium or imidazolium groups are preferred as ion exchange groups, and quaternary ammonium groups are more preferred. Quaternary alkylammonium groups are further preferred as the above quaternary ammonium groups from the viewpoint of alkali durability. The quaternary alkylammonium groups include those in which alkyl groups bonded to nitrogen atoms are bonded to form a ring structure, such as azaadamantyl groups and quinuclidinium groups.

Preferred specific examples of the above quaternary ammonium groups include groups represented by the following formulas (e-1) to (e-8). Preferred specific examples of imidazolium groups include groups represented by the following formula (f-1), and groups represented by the following formula (f-2) or (f-3) are more preferred.

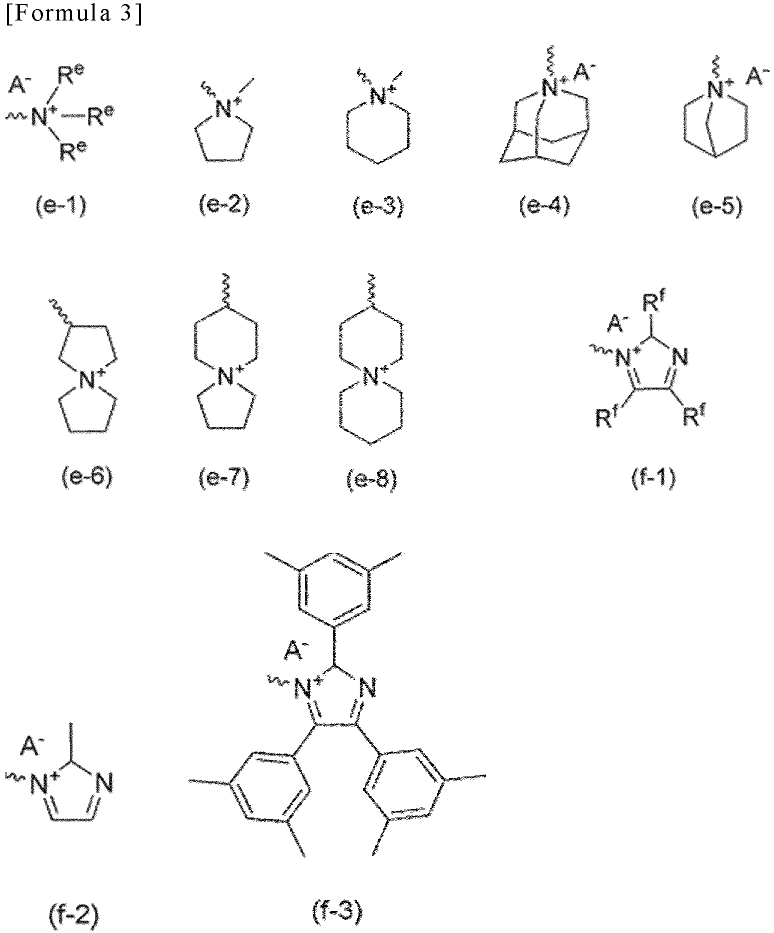

In the formula, R^{e} is each independently a linear, branched, or cyclic alkyl group having 1 to 6 carbon atoms; R^{f} is each independently a hydrogen atom, a linear or branched alkyl group having 1 to 4 carbon atoms, or an aromatic group optionally having substituent groups; and A⁻ is a monovalent or divalent or higher anion. When there is more than one R^{e} or R^{f}, the more than one R^{e} or R^{f} may be the same or different, respectively. Note that the wavy line in the formula indicates the bonding hand that binds to the aromatic ring side constituting the main chain in Ar¹.

Specific examples of alkyl groups as the above R^{e} include a methyl group, an ethyl group, a propyl group, a butyl group, a pentyl group, a hexyl group, and a cyclohexyl group. Specific examples of alkyl groups as the above R^{f} include a methyl group, an ethyl group, a propyl group, and a butyl group. Examples of aromatic groups as R^{f} include a phenyl group, and examples of substituents of the phenyl group include an alkyl group having 1 to 6 carbon atoms.

An inorganic anion is preferred as the above A⁻, and examples thereof include chloride ion (Cl⁻), bromide ion (Br⁻), iodide ion (I⁻), hydrogen carbonate ion (HCO₃⁻), carbonate ion (CO₃²⁻), and hydroxide ion (OH⁻).

The above ion exchange group may be directly bonded to the aromatic ring constituting the main chain in Ar¹, or may also have a linking group and be bonded to the aromatic ring constituting the main chain through the linking group. The linking group represents an organic group that connects the acidic group, quaternary ammonium group or imidazolium group possessed by the ion exchange group to the aromatic ring constituting the main chain. Linear or branched alkylene group is preferred as the organic groups, and linear alkylene group is particularly preferred. The carbon number of the alkylene group can be suitably adjusted according to the physical properties required for the polymer (A). For example, by setting the number of carbon atoms of the above alkylene group to 20 or less, preferably 16 or less, more preferably 12 or less, the ion exchange group capacity of the polymer (A) is increased. Meanwhile, by setting the number of carbon atoms of the above alkylene group to 2 or more, preferably 4 or more, more preferably 6 or more, the solubility and swelling resistance are excellent and the polymer (A) can be easily filled into the porous base material.

The number of ion exchange groups per aromatic ring constituting the main chain in Ar¹ may be one or more, and from the viewpoint of ionic conductivity and polymer stability, one to two is preferred.

The aromatic ring constituting the main chain in Ar¹ may be a benzene ring, a condensed ring such as a naphthalene ring or an anthrancene ring, or a heterocyclic ring (e.g., thiophene) containing an oxygen atom (O), a nitrogen atom (N), or a sulfur atom (S). A structure in which these aromatic rings are linked by single bonds may also be used. Examples of structures in which multiple rings are linked by single bonds include, for example, biphenyl, terphenyl, and fluorene.

In addition to the above ion exchange group, the aromatic ring constituting the main chain in Ar¹ may have substituents other than ion exchange groups. Examples of the substituents include alkyl groups having 1 to 20 carbon atoms and optionally having a substituent, phenyl groups optionally having a substituent, and halogeno groups.

Specific examples of the above alkyl groups include alkyl groups such as a methyl group, an ethyl group, a propyl group, a n-butyl group, a tert-butyl group, a pentyl group, a hexyl group, and an octyl group, which may have phenyl groups, halogeno groups and the like, as substituent groups. Substituents that the above phenyl groups may have include alkyl groups having 1 to 6 carbon atoms, and halogeno groups. The above halogeno groups include fluoro group, chloro group, bromo group, and iodo group.

In view of excellent mechanical strength, chemical durability, and ionic conductivity, it is particularly preferred that the above Ar¹ of polymer (A) is a group represented by any of the following formulas (a-1) to (a-10).

A plurality of Ar¹s in the polymer may be the same or different from each other. 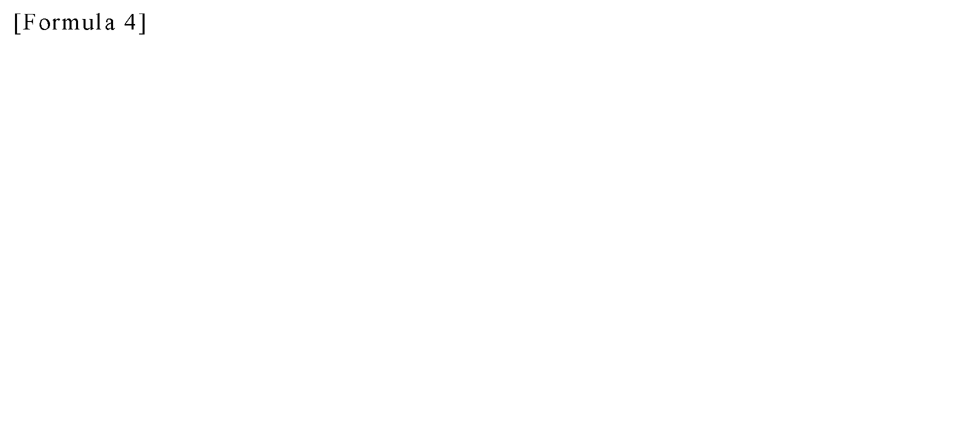 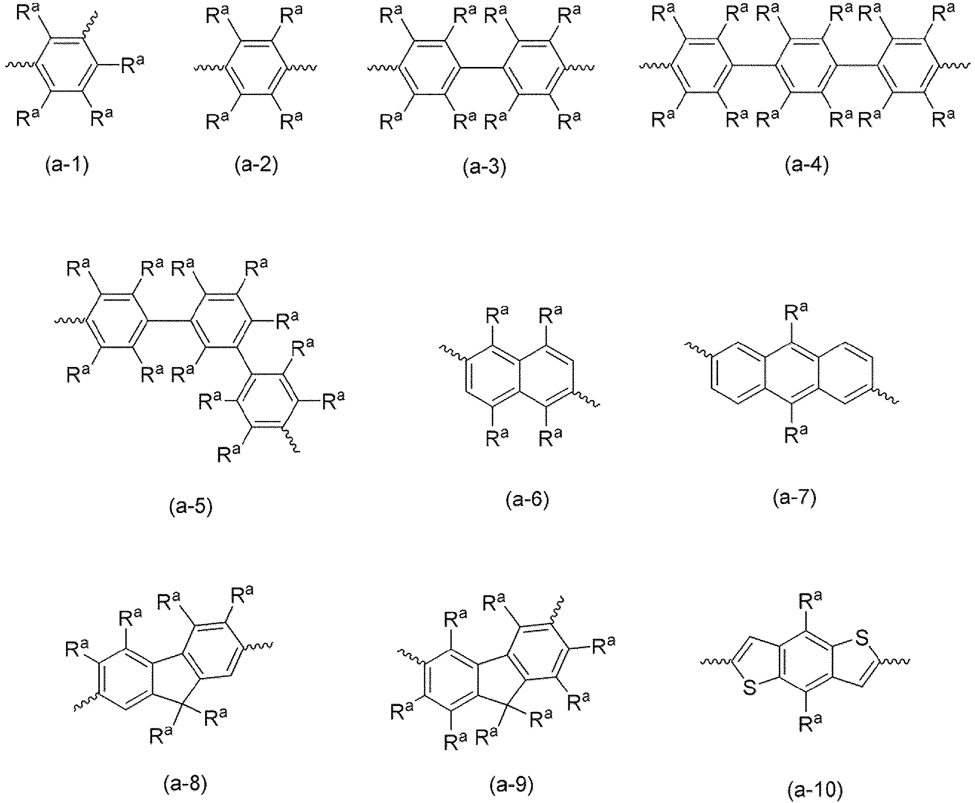 in which R^{a} is each independently a hydrogen atom, an ion exchange group, or a substituent having no ion exchange group, and a plurality of R^{a}s may be the same or different from each other, and at least one of R^{a} is an ion exchange group.

Note that the wavy line indicates the bonding hand that binds to Ar².

The aromatic rings constituting the main chain in Ar² include the same as those in the above Ar¹ and groups linked through spiro atoms. The aromatic ring in Ar² may have other substituents other than anion exchange groups. The other substituents include the same as the substituents other than the ion exchange group in the above Ar¹.

The groups in which two or more aromatic rings are linked through a spiro atom in Ar² include, for example, a group represented by the following formula (c1). Also, the groups in which two or more aromatic rings are linked through a single bond include, for example, groups represented by the following formulas (c2) to (c4). The wavy line indicates the bonding hand that binds to Ar¹. From the viewpoint of filling ability of the polymer into the porous base material, it is preferable that Ar² have no spiro atom. 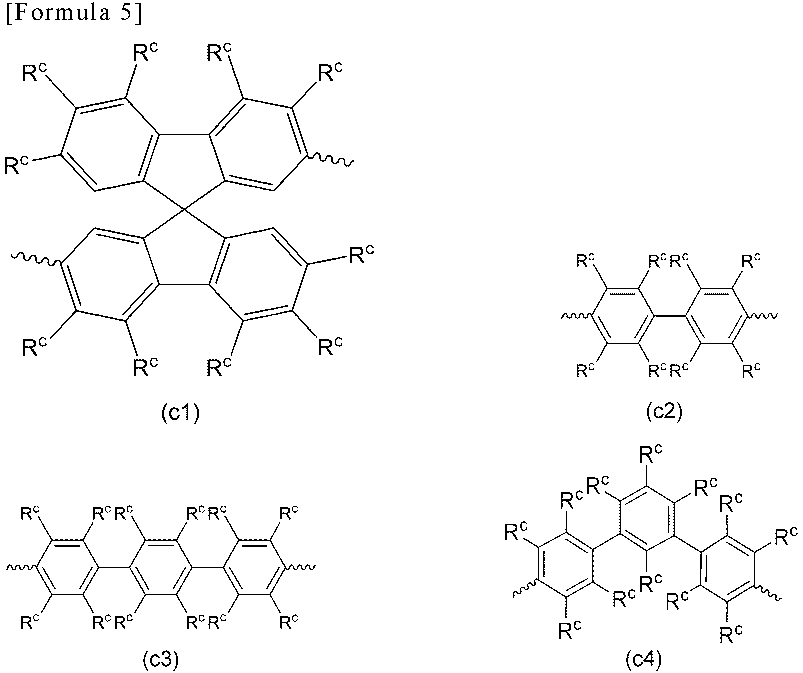 in which R^{C} is each independently a hydrogen atom, halogeno group or organic group.

The weight average molecular weight of polymer (A) can be suitably adjusted from the viewpoint of chemical durability, ease of filling the pores and the like, and can be, for example, in the range of 10,000 to 1,000,000. From the viewpoint of chemical durability, 30,000 or more is preferable, and 100,000 or more is more preferable. Especially when the porous base material is a polyolefin porous base material, even if the weight average molecular weight of polymer (A) is 100,000 or more, it is easy to fill the pores. The weight average molecular weight is a polystyrene equivalent value measured by GPC (gel permeation chromatography).

The polymer (A) may consist only of the structural unit represented by the general formula (1) (also referred to as structural unit (1)), or may have other structural units. Other structural units include, for example, a structure in which no anion exchange group is introduced into Ar¹ of the structural unit (1). It may also contain other structures that can be produced synthetically.

The following polymers (A1) to (A4) are particularly preferred as the polymers (A). Polymer (A2), polymer (A3), or polymer (A4) is particularly preferred, and polymer (A2), or polymer (A3) is particularly preferred from the viewpoint of filling ability of the polymer into the porous base material, and polymer (A3) is further preferred from the viewpoints of filling ability of the polymer, mechanical strength and chemical durability. These polymers will be described in detail below.

### - Polymer (A1)

Polymer (A1) has repeating units represented by the following general formula (1-1): 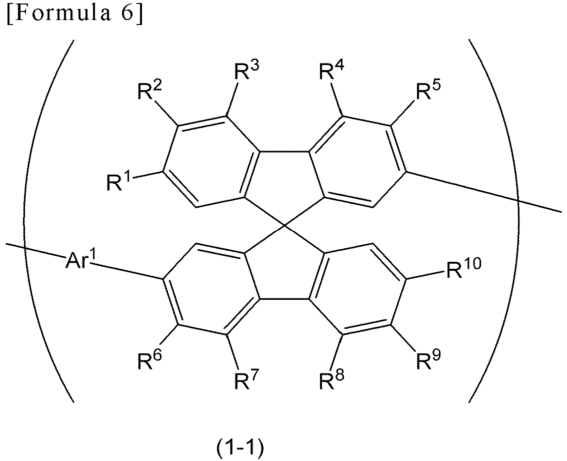 in which R¹ to and R¹⁰ are each independently a hydrogen atom, an alkyl group having 1 to 4 carbon atoms, or a phenyl group, and Ar¹ is the same as that in the above formula (1), and the preferred form is also the same.

Examples of alkyl groups having 1 to 4 carbon atoms as R¹ to R¹⁰ include a methyl group, an ethyl group, a propyl group and a tert-butyl group. In polymer (A1), from the viewpoint of improving solubility, it is preferred that at least one of R¹ and R¹⁰ is an alkyl group, and it is more preferred that R¹ and R¹⁰ are alkyl groups, and it is further preferred that R¹ and R¹⁰ are tert-butyl groups. By having a bulky substituent in at least one of R¹ and R¹⁰, aggregation of the polymer due to π-π stacking or the like is suppressed, and solubility in a solvent is improved. Meanwhile, it is preferred that R¹ to R⁸ are each independently a hydrogen atom or a methyl group, and it is more preferred that they are hydrogen atoms.

Polymer (A1) has a structure in which Ar¹ having an anion exchange group and a spirobifluorene skeleton are alternately repeated. In the polymer (A1), each element constituting the main chain backbone belongs to an aromatic ring or is a spiro atom without a hydrogen atom, and since the main chain backbone has no ether bond, degradation in the presence of alkali or radicals is suppressed and chemical durability is excellent. In addition, the spirobifluorene skeleton has a structure in which two fluorenes are twisted almost at right angles through a spiro atom, and the fluorene skeleton constitutes the main chain, which means that the entire main chain has many bends. As a result, the planarity of the main chain is reduced, which inhibits π-π stacking, and it has excellent solubility in solvents and is easy to handle when filling porous base materials.

The synthesis method of polymer (A1) is not particularly limited, but one suitable example is the method of Scheme A1 below.

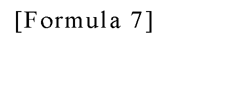

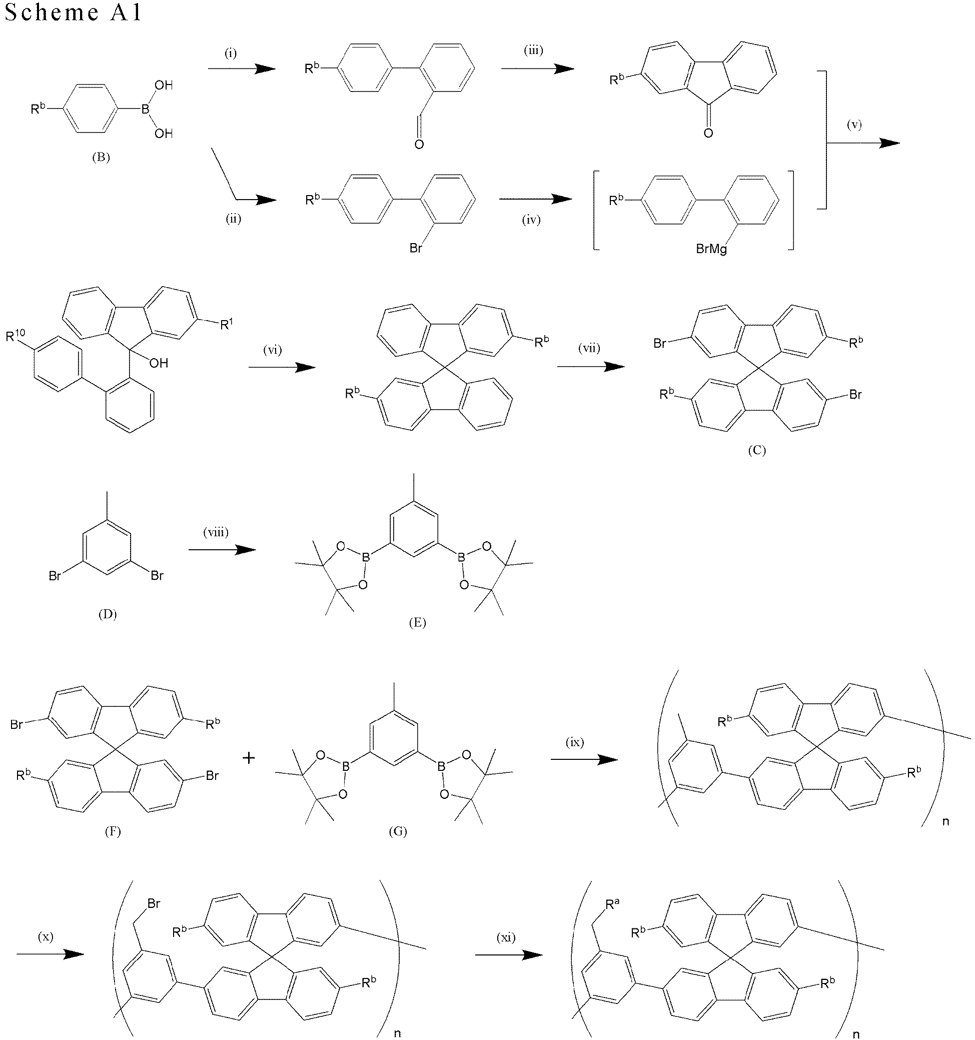

In Scheme A1, R^{a} represents an anion exchange group, and R^{b} represents a substituent corresponding to R¹ and R¹⁰ in the general formula (1-1).

In the example of Scheme A1 above, compound (C) having a brominated spirobifluorene skeleton is synthesized from compound (B) having the desired substituent R^{b} (Step (i) to Step (vii)). Separately, compound (E), which is the precursor of Ar¹ in general formula (1-1), is synthesized by reacting bis(pinacolato)diborane with bromide (D) having the desired aromatic ring (benzene ring in the example of scheme A1) (Step (viii)). After polymerization of the above compound (C) and the above compound (E), the polymer represented by the general formula (1-1) is obtained by introducing the desired anion exchange group (Step (ix) to Step (xi)). The reaction conditions for each of the above steps can be determined by referring to known reactions.

### - Polymer (A2)

Polymer (A2) has repeating units represented by the following general formula (1-2): 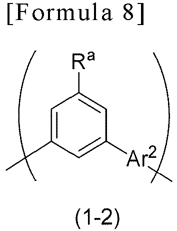 in which R^{a} is a group having an anion exchange group and Ar² is the same as that in the above general formula (1).

Polymer (A2) is a polymer having two or more of the above structural units (1-2) and is a compound whose main chain is totally aromatic. Polymer (A2) has excellent durability against alkalis and radicals because of this structure.

As Ar² in polymer (A2), a phenylene group, a biphenylene group, or a terphenylene group is particularly preferred, and a p-phenylene group (formula (Ar-1) below), a 4,4'-biphenylene group (formula (Ar-2) below), or a 4,4"-terphenylene group (formula (Ar-3) below) is more preferred. 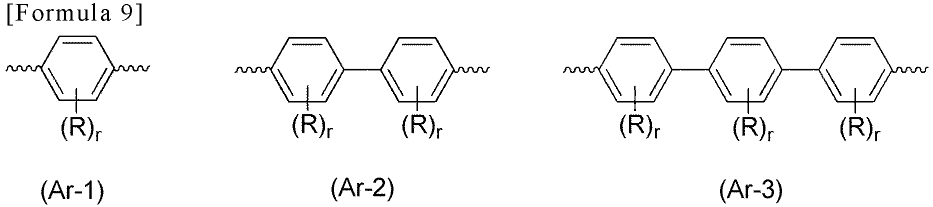 in which R is a substituent that Ar² may have, r is an integer from 0 to 4, and a plurality of R and r may be the same or different.

When Ar² is a p-phenylene group, a 4,4'-biphenylene group, or a 4,4''-terphenylene group, the main chain backbone of the polymer (A2) tends to have a zigzag arrangement as shown in the following formula. The following formula is representative of the case where Ar² is a p-phenylene group, but a 4,4'-biphenylene group or a 4,4''-terphenylene group can also be used. As shown in the formula below, the main chain backbone of polymer (A2) tends to take a zigzag arrangement, and furthermore, each R^{a} tends to be disposed on the outer surface of the bend of the backbone. Therefore, intramolecular aggregation due to bending of the main chain and the like is suppressed. As a result, the polymer can form an electrolyte membrane with excellent ionic conductivity.

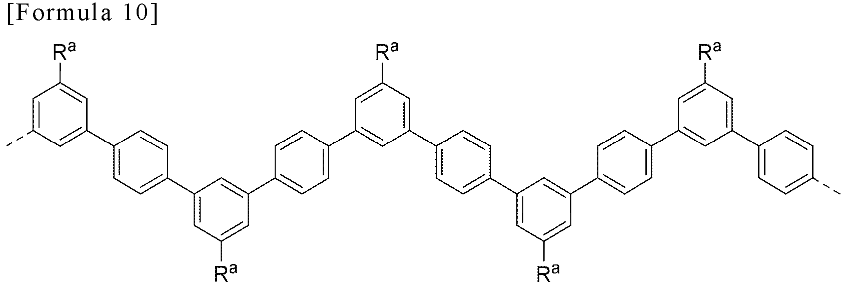

As the groups R^{a} having an anion exchange group in polymer (A2), the group represented by the following formula (Ra-1) is particularly preferred. 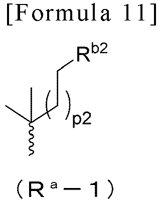 in which R^{b2} is an anion exchange group and p2 is an integer between 1 and 20. Note that the wavy line indicates the bonding hand that binds to the benzene ring.

In the group represented by the above formula (R^{a}-1), a carbon atom adjacent to the benzene ring that constitutes the main chain is a quaternary carbon. Therefore, π-π stacking between polymers (A2) is suppressed. As a result, aggregation of polymer (A2) is suppressed, making it easier to dissolve in solvents, and it has excellent handling properties during membrane formation and other processes.

p2 represents {(number of carbon atoms from R^{b2} to quaternary carbon) - 1} and may be suitably adjusted in the range from 1 to 20. Of them, 1 to 15 is preferred, 1 to 12 is more preferred, and 1 to 6 is even more preferred.

The synthesis method of polymer (A2) is not particularly limited, but one suitable example is the method of Scheme A2 below. 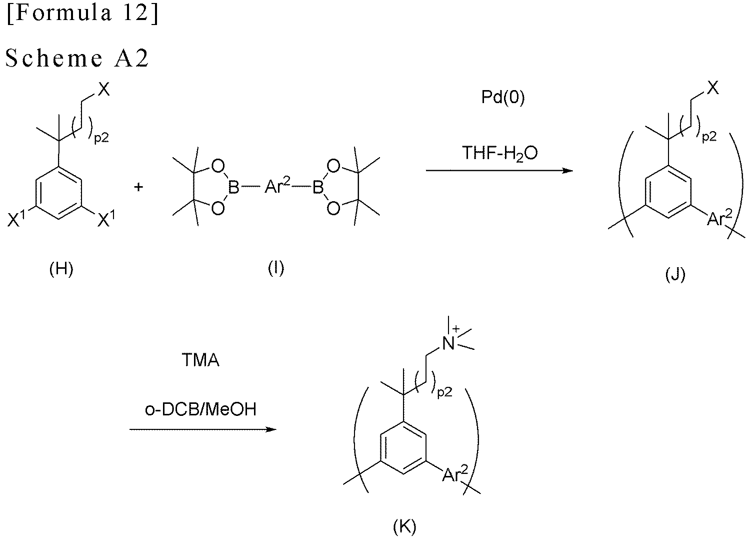 in which X and X¹ represent halogen atoms, and Ar² and p2 are as described above. Br is preferred as the halogen atom in X¹.

In the example of Scheme A2 above, first, compound (H) and compound (I) having the desired Ar² are prepared, and the compound (H) and compound (I) are polymerized to obtain a polymer having the structural unit represented by (J). Polymer (A2) is then obtained by introducing the desired anion exchange group into polymer (J). In the above scheme A2, quaternary ammonium is introduced, but other ionic functional groups can also be introduced accordingly. The reaction conditions for each of the above steps can be determined by referring to known reactions.

### - Polymer (A3)

In polymer (A3), in the repeating unit represented by the above general formula (1), Ar² has the partial structure represented by the following formula (2) at both ends. In other words, the Ar² is a divalent group containing an aromatic ring having a fluoro group (-F) at the α-position of the terminal carbon atom. Here, the terminus of Ar² refers to the carbon atom bonded to Ar¹. Note that the wavy line represents the bonding hand that binds to Ar¹, and the dotted line indicates that part of the aromatic ring is omitted.

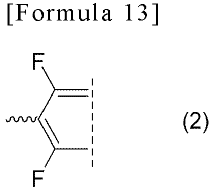

Polymer (A3) has a structure in which Ar¹ having an anion exchange group and Ar² having a partial structure (2) containing a fluoro group (-F) are alternately disposed. Ar¹ and Ar² constituting the main chain each have aromatic groups and have excellent chemical durability against alkalis and radicals. In addition, in the polymer (A3), Ar¹ having an ion exchange group linked to the end of the side chain through an alkyl chain and Ar² having no ion exchange group are alternately disposed. Because of this structure, it has excellent solvent solubility and ionic conductivity. In addition, the reactivity of the compound with partial structure (2) and the compound represented by formula (4) described below is high, and polymers with higher molecular weight can be produced. By using the present polymer with a higher molecular weight, it is also possible to form membranes with excellent durability.

Ar² may have two partial structures (2) in one ring structure (e.g., a benzene ring), for example, as in Formula (b-1) below, or one C-F bond may constitute two partial structures (2) as in Formula (b-2) below. Furthermore, in the case of the above chain polycyclic hydrocarbon, it may have one partial structure (2) in each of the two ring structures of the chain polycyclic hydrocarbon, and these rings may be linked directly or through the above linking group, or it may have two partial structures (2) in one of the multiple ring structures. Preferably, Ar² in polymer (A3) does not have a spiro atom.

In polymer (A3), it is preferred that the above Ar² is one or more selected from the following formulas (d1) to (d9) from the viewpoint that it is possible to form an electrolyte membrane with excellent ionic conductivity and film formability, and excellent chemical durability and membrane strength. Note that the wavy line indicates the bonding hand that binds to Ar¹. 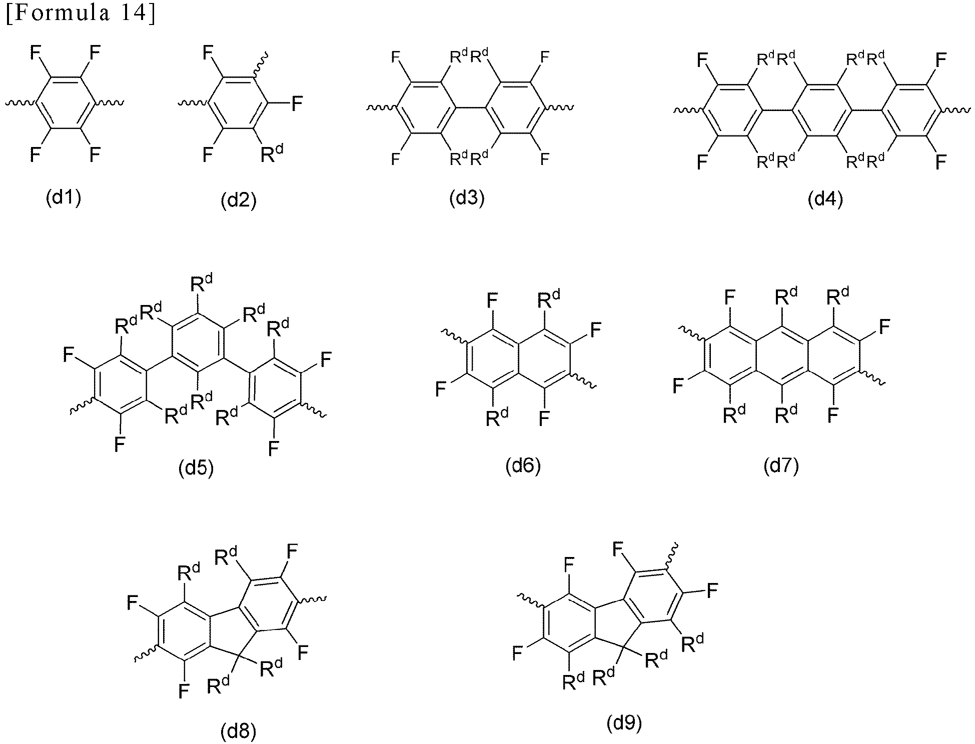 in which R^{d} is each independently a hydrogen atom, a halogeno group or an organic group.

Examples of halogeno group as the above R^{d} include a fluoro group, a chloro group, a bromo group, and an iodo group, and of them, a fluoro group is preferred.

Examples of organic groups as the above R^{d} include, for example, a linear or branched alkyl group having 1 to 20 carbon atoms (not including the number of carbon atoms of substituents) and optionally having substituents (e.g., halogeno group).

From the viewpoint of ease of production, the following formulas (d10) to (d14) are preferred for the above Ar². Note that the wavy line indicates the bonding hand that binds to Ar¹.

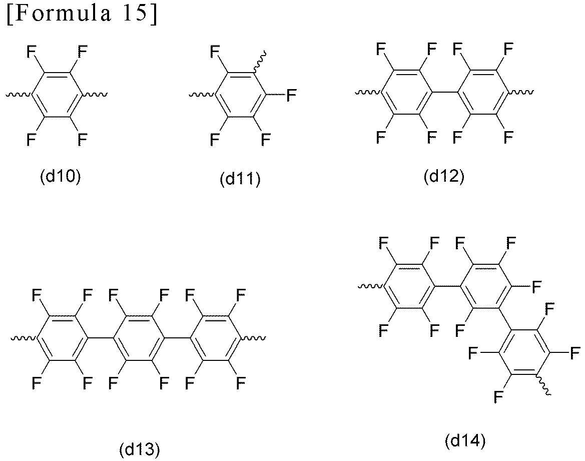

The synthesis method of polymer (A3) is not particularly limited, but one suitable example is the method of Scheme A3 below. 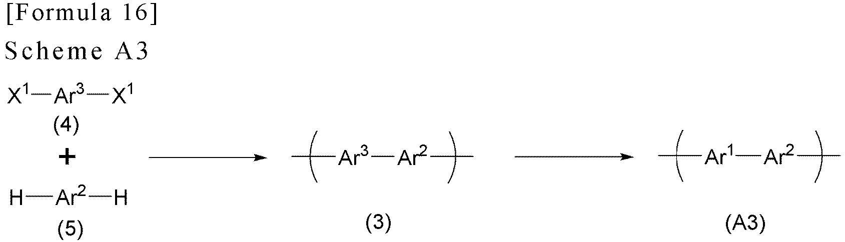 in which X¹ is each independently Br or I, Ar³ is an aromatic group having a functional group selected from halogeno group, sulfonate ester group, phosphate ester group, carboxylate ester group, imidazole group and amino group, and Ar² is the same as that in polymer (A3).

Because of the excellent reactivity of X¹ of compound (4) and the hydrogen atom of the following partial structure (5a) possessed by Ar² of compound (5), ion-conductive polymers with high molecular weight (for example, weight average molecular weight of 30,000 or more, preferably 100,000 or more) can be synthesized relatively easily.

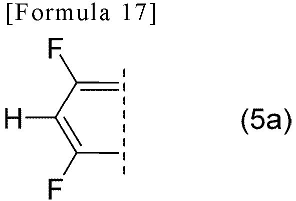

In the above scheme A3, a compound (4) having the desired Ar³ and a compound (5) having the desired Ar² are first prepared. Then, these compounds are reacted in the presence of, for example, a Pd complex, a ligand, a carboxylic acid (RCO₂H) and a base in a solvent at 80 to 140°C for 1 to 48 hours to obtain a polymer having the structural unit (3).

Polymer (A3) is then obtained by introducing the desired ion exchange group into the polymer having the structural unit (3). Thus, polymer (A3) can be easily produced with very few synthesis steps by using compound (4) and compound (5) as raw materials.

### - Polymer (A4)

Polymer (A4) has repeating units represented by the following general formula (1-4): 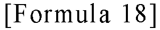 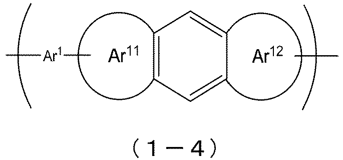 in which rings Ar¹¹ and Ar¹² are rings condensed to the benzene ring, and a fused ring having three or more rings has an aromatic attribute as a whole, and Ar¹ is the same as that in the above general formula (1).

Polymer (A4) has a structure in which Ar¹ having an anion exchange group and Ar² consisting of a fused ring having three or more rings are alternately repeated. In general, polymers containing many ion exchange groups tend to swell easily, but polymer (A4) has excellent swelling resistance due to the alternating repetition of Ar¹ and Ar² and the π-π stacking of a fused ring having three or more rings.

Rings Ar¹¹ and Ar¹² are aromatic rings optionally having heteroatoms. The heteroatoms include N (nitrogen atom), O (oxygen atom) and S (sulfur atom). For condensed rings including rings Ar¹¹ and Ar¹², a fused ring having three or more rings is preferred from the viewpoint of swelling resistance. Meanwhile, from the viewpoint of increasing the ion exchange capacity of polymer (A4), a fused ring having 5 rings or less is preferable, and a fused ring having 4 rings or less is more preferable.

Preferred specific examples of the condensed rings include the following. Note that the wavy line indicates the bonding hand that binds to Ar¹. The hydrogen atom may be replaced by a group that does not have the above anion exchange group.

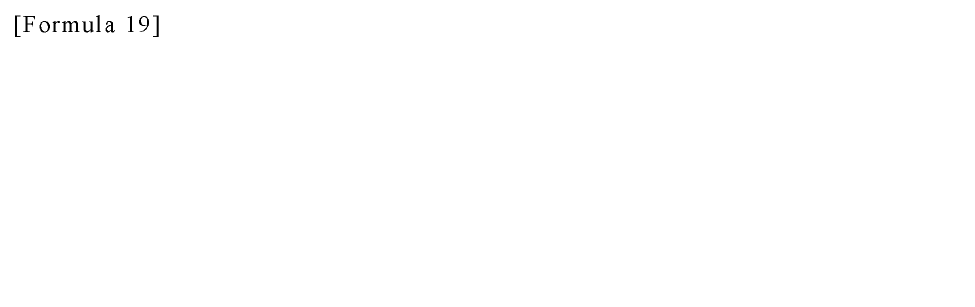

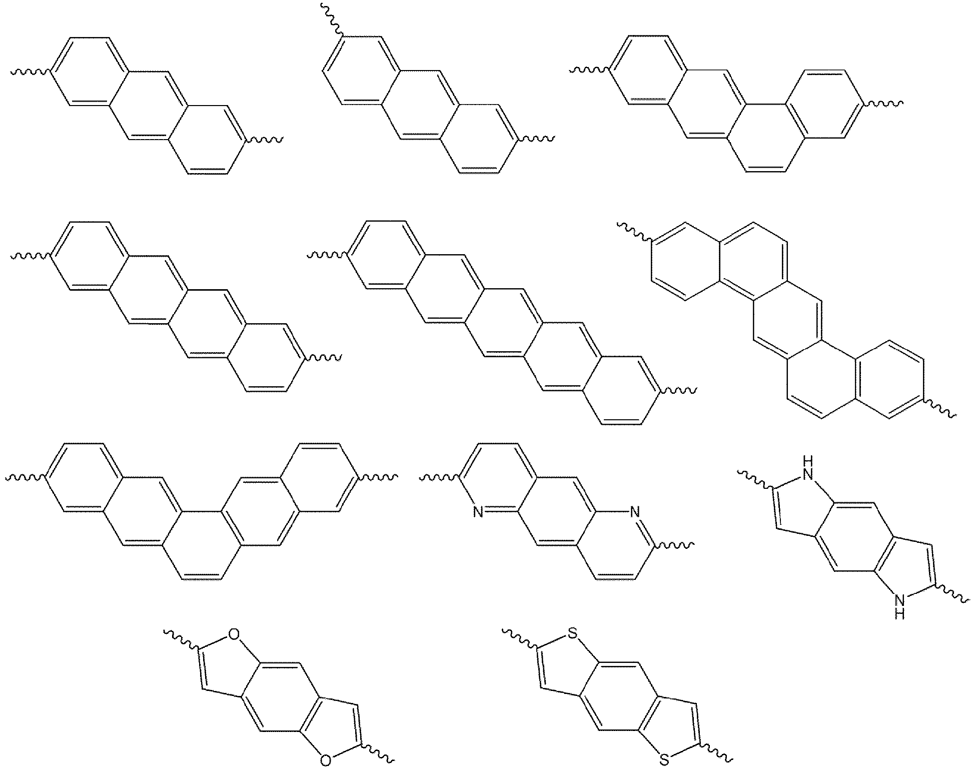

Polymer (A4) is preferably synthesized by preparing a precursor (1-5) having a repeating unit represented by the following general formula (1-5) and then removing the substituent (TL) after filling the porous base material. 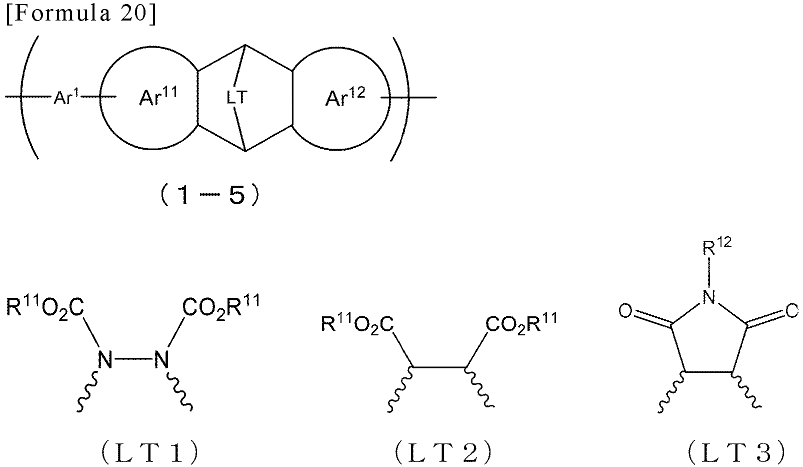 in which LT is a group represented by the general formula (LT1) to (LT3), R¹¹ is each independently an alkyl group having 1 to 6 carbon atoms, R¹² is an alkyl group having 1 to 6 carbon atoms or a phenyl group, and Ar¹, Ar¹¹, and Ar¹² are the same as those in the above general formula (1-4).

The alkyl group having 1 to 6 carbon atoms as R¹¹ and R¹² can be either a linear or branched alkyl group. Specific examples include a methyl group, an ethyl group, a propyl group, a n-butyl group, a tert-butyl group, a pentyl group, and a hexyl group.

Polymer (A4) has excellent swelling resistance as described above. Therefore, it is difficult to dissolve in various organic solvents and has poor handling properties during processing. In the above precursor, a substituent (TL) represented by the above general formulas (LT1) to (LT3), which is bulky and relatively easily removable by the action of heat or light, is introduced into the site corresponding to the condensed ring of polymer (A4). The precursor (1-5) has improved solubility in various organic solvents due to the inhibition of π-π stacking of the hydrophobic moiety by the substituents. Therefore, the above precursor has excellent handling properties and can be easily filled into porous base materials. The substituent (TL) can be removed by heating or photo irradiation.

The synthesis method of the above precursor is not particularly limited, but preferred specific examples include the method of Scheme A4 below.

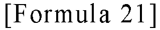

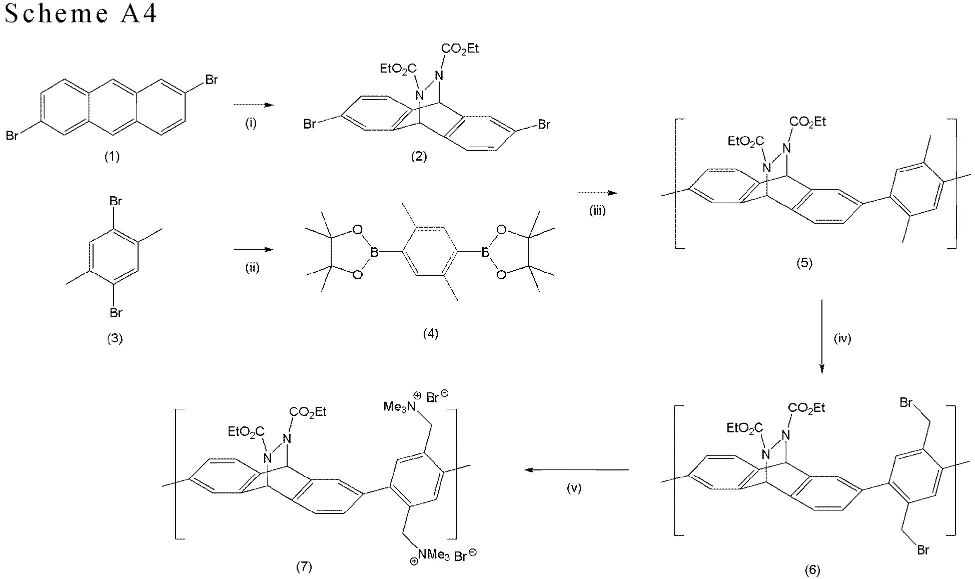

An example of each step of the above Scheme A4 will be described below.

Step (i): A toluene solution of the above compound (1) is prepared, diethyl azodicarboxylate (DEAD) is added thereto, and the solution is heated under reflux to obtain the above compound (2).

Step (ii): Separately, a N,N-dimethylformamide (DMF) solution of the above compound (3) is prepared, and bis(pinacolato)diborane, potassium acetate (KOAc), and [1,1'-bis(diphenylphosphino)ferrocene] palladium (II) dichloride (Pd(dppf) Cl₂) are added thereto, and the solution is heated to 90°C to obtain the above compound (4).

Step (iii): Tripotassium phosphate (K₃PO₄) and tetrakis(triphenylphosphine)palladium (Pd (PPH₃)₄) are added to a toluene solution of the above compound (2) and the above compound (4) obtained, and the solution is heated to 100°C to polymerize to obtain the above compound (5).

Step (iv): The obtained compound (5), N-bromosuccinimide (NBS), and azobisisobutyronitrile (AIBN) are added and mixed in chlorobenzene, and the solution is heated to 110°C to obtain the above compound (6).

Step (v): The obtained compound (6) is heated to 50°C in DMF/THF (tetrahydrofuran) mixed solvent to obtain the precursor represented by the above chemical formula (7).

### <Method for producing pore-filling membranes>

Examples of methods for producing pore-filling membranes include a method in which a polyarylene polymer is applied to a porous base material and then dried.

Examples of methods for applying a polyarylene polymer to a porous base material include, for example, dipping, spraying, spin-coating, and bar-coding after preparing a polyarylene polymer solution. A pore-filling membrane can be obtained by permeating a polyarylene polymer solution into a porous base material and then drying it. The filling of the polyarylene polymer in the porous base material can be confirmed by Raman analysis, for example.

The present pore-filling membrane can be suitably used as an electrolyte membrane for fuel cells, electrolysis devices and the like, because of its excellent chemical durability, mechanical strength, and ionic conductivity.

### [Electrolysis Device]

The electrolysis device of the present disclosure includes the present pore-filling membrane. The electrolysis device can be used, for example, as a structure of a membrane electrode assembly in which the present pore-filling membrane is used as the electrolyte membrane in an electrolytic cell and the anode and cathode are laminated on the electrolyte membrane, and a material of interest can be electrolyzed (oxidation-reduction reaction) by the membrane electrode assembly to obtain the target object.

When the above electrolyte membrane is applied to water electrolysis, a proton-conductive or anion-conductive electrolyte membrane is used as the above electrolyte membrane. For example, an anode is disposed on one side of the proton-conductive electrolyte membrane and a cathode is disposed on the other side of the proton-conductive electrolyte membrane, and protons generated at the anode are transferred to the cathode through the electrolyte membrane and combined with electrons at the cathode, and thus hydrogen can be obtained. The formulas of reactions at the respective electrodes when a proton-conducting membrane is used are as follows.

Anode: 2H₂O → O₂ +4H⁺ + 4e⁻

Cathode: 2H⁺ + 2e⁻ → H₂

Other electrolysis technologies include electrolysis technologies in which carbon dioxide is electrolyzed to produce formic acid. For example, protons generated at the anode can be transferred to the cathode through the electrolyte membrane and react with carbon dioxide supplied to the cathode to obtain formic acid. The formulas of reactions at the respective electrodes are as follows.

Anode: 2H₂O → O₂ +4H⁺ + 4e⁻

Cathode: CO₂ + 2H⁺ + 2e⁻ → HCOOH

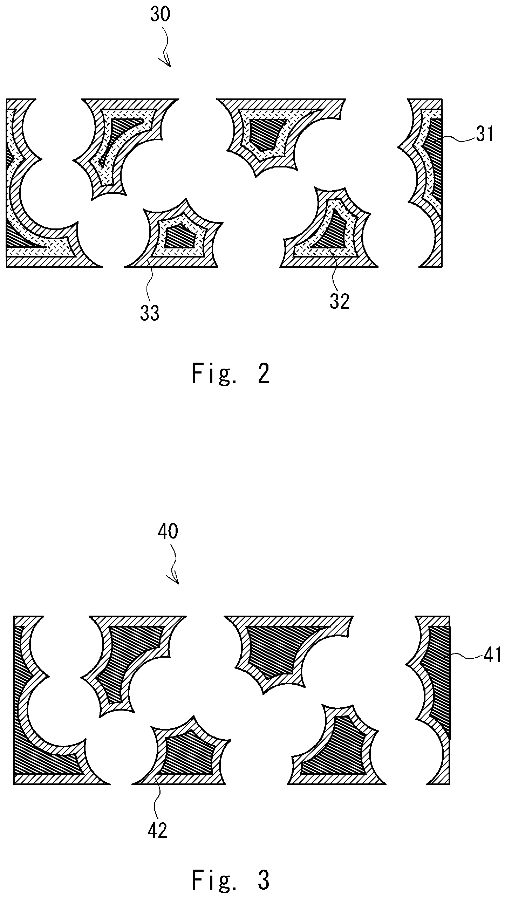

The structure of the water electrolysis device will be described with reference to Fig. 2. Fig. 2 is a schematic cross-sectional view illustrating an example of a key part of a water electrolysis device. The water electrolysis device 1 illustrated in Fig. 2 includes an electrolyte membrane 5 using the present pore-filling membrane, an anode 10 disposed on one side of the electrolyte membrane 5, a cathode 20 disposed on the other side of the electrolyte membrane 5, a power source 7 connected to the anode 10 and the cathode 20, and a unit for supplying water which supplies water or an alkaline aqueous solution to the above cathode 20. The anode 10 may have at least an anode catalyst 11, and may also have the first diffusion layer 12. The cathode 20 may have at least a cathode catalyst 21, and may also have the second diffusion layer 22. The membrane electrode assembly 8 includes at least the anode catalyst 11 disposed on one side of the membrane 5 and the cathode catalyst 21 disposed on the other side of the membrane 5. In the example of Fig. 2, there is a cell 6 having a separator 13, 23 on the outer surface of the anode 10 and the cathode 20, respectively. The present water electrolysis device 1 may have a single cell 6 or a plurality of cells 6 stacked. The unit for supplying water supplies water to at least one of the cathode and the anode.

By using the above pore-filling membrane as electrolyte membrane 5, a water electrolysis device with high water electrolysis performance and excellent durability can be obtained.

In the case where the water electrolysis device is a solid alkaline water hydrolysis device, and when, for example, voltage is applied to both electrodes while supplying water or an alkaline aqueous solution to the cathode 20, the following reaction occurs in the cathode 20 to generate hydrogen gas.

2H₂O + 2e⁻ → 2OH⁻ + H₂

Hydroxide ions (OH⁻) penetrate the electrolyte membrane 5 and move to the anode 10. The following reaction occurs in the anode 10 to generate oxygen gas.

2OH⁻ → H₂O + 1/2O₂ + 2e⁻

The hydrogen and oxygen generated is discharged from the cell 6 through gas flow paths 14, 24 provided on the separators 13 and 23, respectively. The gas flow paths are connected, for example, to a storage tank through a gas-liquid separator not shown. After water is removed in the gas-liquid separator, hydrogen and oxygen are each stored in the storage tank, and the like.

Water supplied to the water electrolysis device may be pure water or an alkaline aqueous solution. By using the alkaline aqueous solution, water electrolysis can be performed more efficiently than using pure water. Because the above pore-filling membrane is used as the anion-conducting membrane 5, it has excellent durability even when alkaline aqueous solutions are used. The solute in the alkaline aqueous solution is not particularly limited, and for example, 1M potassium hydroxide may be used.

The anode 10 may have at least an anode catalyst 11, and may also have the first diffusion layer 12. The anode catalyst 11 is preferably metal or metal alloy. The metals and metal alloys may be suitably selected from known ones, and examples thereof include platinum, cobalt, nickel, palladium, iron, silver, gold, copper, iridium, molybdenum, rhodium, chromium, tungsten, manganese, ruthenium, a metal compound thereof, a metal oxide thereof and an alloy including two or more of them.

Furthermore, it is preferable that the anode catalyst 11 be a porous body in consideration of the contact area with water and diffusion of water and gas. Examples of porous catalysts include a connected body of metal particles prepared by fusing particles of the above metal acting as a catalyst, a foamed body (foam) of the above metal, and a felt (nonwoven fabric) or mesh porous body formed from a wire-shaped or fibrous metal.

The anode catalyst 11 may be used after coating the surface of the above metal with a known electrolyte polymer (ionomer). Meanwhile, since alkaline aqueous solution moves in the membrane electrode assembly 8 to achieve ionic conductivity in the present embodiment, the membrane electrode assembly 8 has excellent ionic conductivity even without using electrolyte polymer. Furthermore, the absence of the electrolyte polymer coating on the anode catalyst further improves catalytic activity.

It is particularly preferable that the anode catalyst include nickel foam. To achieve both durability and high activity, (I) a catalyst having a nickel oxide layer including NiOOH and a layer including NiFe on a nickel foam in that order (hereinafter also referred to as catalyst (I)), and (II) a catalyst having a phosphide layer including Ni₂P and Fe₂P on a nickel foam (hereinafter also referred to as catalyst (II)) are preferred.

### <Catalyst (I)>

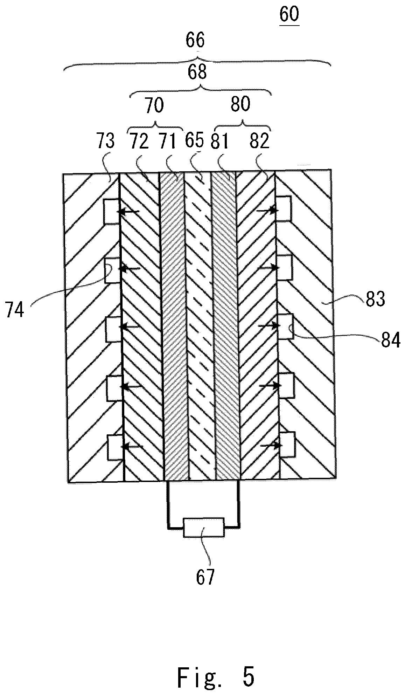

The catalyst having a nickel oxide layer including NiOOH and a layer including NiFe on a nickel foam in that order will be described with reference to Fig. 5. Fig. 5 is a schematic cross-sectional view illustrating the present catalyst. The catalyst 30 illustrated in Fig. 5 has a nickel oxide layer 32 including NiOOH and a layer 33 including NiFe on a nickel foam 31 in that order. In the example of Fig. 5, the inner surface of pores also has the above layer structure. The above layer structure allows the catalyst to have excellent durability and high activity even in an alkaline environment while a nickel foam is used.

The nickel oxide layer 32 includes NiOOH. Having the nickel oxide layer, the catalyst has higher durability and higher activity than the catalyst in which a layer including NiFe is formed directly on the nickel foam.

The nickel oxide layer may include at least NiOOH, and may include another nickel oxide to the extent that the effect of the present invention is achieved. Examples of other nickel oxide include NiO and Ni₂O₃.

The ratio of NiOOH in the nickel oxide layer is preferably 50% by mass or more, more preferably 80% by mass or more, and even more preferably 90% by mass or more based on 100% by mass of the nickel oxide layer.

In the catalyst (I), the nickel oxide layer has a thickness of preferably 50 to 500 nm and more preferably 100 to 400 nm. When the nickel oxide layer has a thickness of 50 nm or more, a catalyst with excellent durability and activity can be obtained. When the nickel oxide layer has a thickness of 500 nm or less, the catalyst is sufficiently effective.

The catalyst (I) has a layer including NiFe on the above nickel oxide layer. Formation of the NiFe layer on the nickel oxide layer reduces leaching of Fe, providing a catalyst with excellent durability.

It is preferable that the ratio of Fe in the catalyst (I) be 4 to 20% by mass base on the total amount of the catalyst including nickel foam. When the ratio of Fe is 4% by mass, a catalyst with excellent durability and activity can be obtained. Furthermore, when the ratio of Fe is 20% by mass or less, the catalyst is sufficiently effective.

The catalyst (I) has a thickness of preferably 100 to 2,000 µm, and more preferably 200 to 1,600 µm. When the catalyst (I) has a thickness of 100 µm or more, the catalyst has excellent durability and activity.

The thickness of the respective layers may be measured by a scanning electron microscope (SEM) and based on mapping with an energy dispersive X-ray spectrometer (EDX). The composition of the respective layers may be measured by X-ray photoelectron spectroscopy (XPS).

### (Method for producing catalyst (I))

Next, the method for producing the above catalyst (I) will be described. The method for producing the catalyst (I) includes a step for forming a nickel oxide layer including NiOOH on nickel foam. Formation of a nickel oxide layer including NiOOH on nickel foam allows a layer including NiFe to be easily formed, and also reduces leaching of the layer including NiFe.

Examples of methods for forming a nickel oxide layer on nickel foam includes a method in which a nickel oxide layer is formed by spraying particles of NiOOH, for example, by an aerosol deposition method, and a method in which the surface of nickel foam is oxidized. The method in which the surface of the base material is oxidized is preferred because a nickel oxide layer can be easily formed on the inner surface of the nickel foam. Electrochemical oxidation is preferred as the method of oxidation of the surface of the base material.

Examples of methods of electrochemical oxidation include a method in which first a nickel foam having a desired shape is prepared, the nickel foam is immersed, for example, in an alkaline electrolyte, and then voltage is applied thereto to oxidize it. The nickel foam may be produced by a known method, or a commercially available product may be used. Furthermore, if, for example, the nickel foam has an oxide layer, acid treatment may be performed as needed. By adjusting the time of application of voltage, the thickness of the nickel oxide layer can be controlled.

Formation of the nickel oxide layer may be checked using the Raman spectrum.

Next, a layer including NiFe is formed on the nickel oxide layer.

Examples of methods for forming a layer including NiFe on a nickel oxide layer includes a method in which a layer including NiFe is formed by spraying particles of NiFe, for example, by an aerosol deposition method, and a method in which Fe is electrodeposited. The method in which Fe is electrodeposited is preferred because a layer including NiFe can be easily formed on the inner surface of the nickel foam.

Examples of methods of electrodeposition of Fe include a method in which the above intermediate product is immersed in electrolyte including Fe²⁺ and then Fe is electrodeposited by applying voltage. By adjusting the time of application of voltage, the thickness of the layer including NiFe and the ratio of Fe in the catalyst can be controlled.

### <Catalyst (II)>

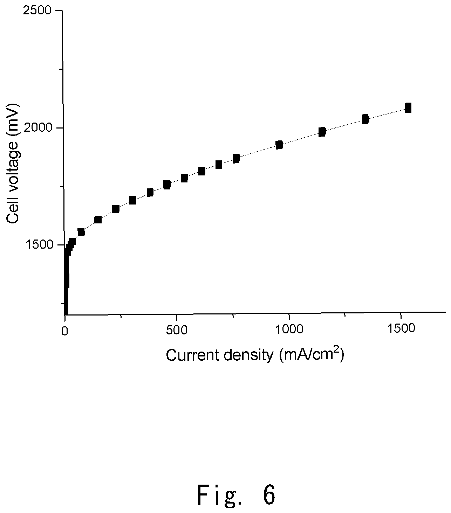

The catalyst having a phosphide layer including Ni₂P and Fe₂P on a nickel foam will be described with reference to Fig. 6. Fig. 6 is a schematic cross-sectional view illustrating the present catalyst. The catalyst 40 illustrated in Fig. 6 has a phosphide layer 42 including Ni₂P and Fe₂P on a nickel foam 41. In the example of Fig. 6, the inner surface of pores also has the above layer structure. The above layer structure allows the catalyst to have excellent durability and high activity even in an alkaline environment while a nickel foam is used.

The nickel foam 41 has the same shape as the catalyst (I). Preferred embodiments are also the same.

In the catalyst (II), the phosphide layer 42 includes Ni₂P and Fe₂P. Since the phosphide layer in the catalyst (II) especially includes Fe₂P, the catalyst (II) has higher durability and activity than a catalyst having a layer including only Ni₂P on nickel foam.

The catalyst (II) has a thickness of preferably 100 to 2,000 µm, and more preferably 200 to 1,600 µm. When the nickel catalyst (II) has a thickness of 100 µm or more, the catalyst has excellent durability and activity.

The ratio of P in the catalyst (II) is preferably 10 to 50% by mass, and more preferably 20 to 30% by mass based on the total amount of the catalyst from the viewpoints of durability and activity.

The ratio of Fe in the catalyst (II) is preferably 1 to 10% by mass, and more preferably 1 to 3% by mass based on the total amount of the catalyst from the viewpoints of durability and activity.

The ratio of the total amount of Ni₂P and Fe₂P in the phosphide layer is preferably 50 to 100% by mass, more preferably 70 to 100% by mass, and even more preferably 85 to 100% by mass based on the total amount of the phosphide layer from the viewpoints of durability and activity.

It is preferable that the ratio between Ni₂P and Fe₂P in the phosphide layer be 9 : 1 to 5 : 5 in the mass ratio from the viewpoints of durability and activity.

In the catalyst (II), the phosphide layer has a thickness of preferably 50 to 500 nm and more preferably 100 to 400 nm. When the phosphide oxide layer has a thickness of 50 nm or more, a catalyst with excellent durability and activity can be obtained. When the phosphide layer has a thickness of 500 nm or less, the catalyst is sufficiently effective.

The thickness of the phosphide layer may be measured by a scanning electron microscope (SEM) and based on mapping with an energy dispersive X-ray spectrometer (EDX). The composition of the phosphide layer may be measured by X-ray photoelectron spectroscopy (XPS).

### (Method for producing catalyst (II))

Next, the method for producing the above catalyst (II) will be described. Examples of methods for producing the catalyst (II) include a method in which nickel foam is immersed in an iron ion solution and the nickel foam after immersion is phosphorized. A phosphide layer including Ni₂P and Fe₂P can be easily formed on a nickel foam by this method, and the resulting catalyst has excellent durability and activity.

In the present method, first a nickel foam having a desired shape is prepared, and the nickel foam is immersed in an iron ion solution. The iron ion solution is prepared by dissolving a dissociative iron compound in a solvent. Examples of iron compounds include iron chloride, and compounds that produce trivalent iron ions are preferred. The solvent usually includes water, and may also include other solvents. A solvent compatible with water is preferred as the other solvent, and examples thereof include methanol and ethanol. The concentration of iron ions in the solution is not particularly limited, and the solution has a concentration of iron ions of, for example, 0.01 to 0.5 mol/l.

The time of immersion of the nickel foam is not particularly limited, and the time may be suitably adjusted in the range of 10 minutes to 6 hours. The nickel foam after immersion may be dried according to need.

Next, the nickel foam after immersion is phosphorized. By phosphorizing with iron ions attached to the surface of the base material, a phosphide layer including Ni₂P and Fe₂P can be easily formed.

The method of phosphorization is not particularly limited, and a method in which the nickel foam is heated in the presence of a phosphorous compound is preferred. Specific examples thereof include a method in which a phosphorous compound and the nickel foam after immersion are placed in a furnace, and the two are heated in an inert gas atmosphere such as nitrogen gas.

When supplying inert gas to the furnace during heating, the phosphorous compound is disposed on the upstream and the nickel foam is disposed on the downstream to phosphorize them efficiently.

A phosphorous compound which decomposes at the heating temperature is preferred. Examples of phosphorus compounds include sodium hypophosphite.

The heating temperature may be suitably adjusted in consideration of the decomposition temperature of the phosphorus compound and the like, and the heating temperature is for example, in the range of 300 to 600°C, and preferably 350 to 550°C.

The anode 10 may also have the first diffusion layer 12 in addition to the anode catalyst 11. The first diffusion layer 12 may be suitably selected from known gas diffusion layers. Examples thereof include a foaming metal layer such as nickel foam, and a porous carbon layer.

The cathode 20 may have at least a cathode catalyst 21, and may also have the second diffusion layer 22. The cathode catalyst 21 is preferably metal or metal alloy. The metals and metal alloys may be suitably selected from known ones, and examples thereof include platinum, cobalt, nickel, palladium, iron, silver, gold, copper, iridium, molybdenum, rhodium, chromium, tungsten, manganese, ruthenium, a metal compound thereof, a metal oxide thereof and an alloy including two or more of them.

Furthermore, it is preferable that the cathode catalyst 21 be a porous body in consideration of the contact area with water and diffusion of water and gas. Examples of porous catalysts include a connected body of metal particles prepared by fusing particles of the above metal acting as a catalyst, a foamed body (foam) of the above metal, and a felt (nonwoven fabric) or mesh porous body made of a wire-shaped or fibrous metal.

The cathode catalyst 21 may be used after coating the surface of the above metal with a known electrolyte polymer. Meanwhile, since alkaline aqueous solution moves in the membrane electrode assembly 8 to achieve ionic conductivity in the present embodiment, the membrane electrode assembly 8 has excellent ionic conductivity even without using electrolyte polymer. Furthermore, the absence of the electrolyte polymer coating on the cathode catalyst further improves catalytic activity.

It is particularly preferable that the cathode catalyst include a porous body of metal or metal alloy. To achieve both durability and high activity, a catalyst having a layer including Ru and metal phosphide derived from metal or metal alloy on the porous body of metal or metal alloy (hereinafter referred to as catalyst (III)) is preferred.

### <Catalyst (III)>

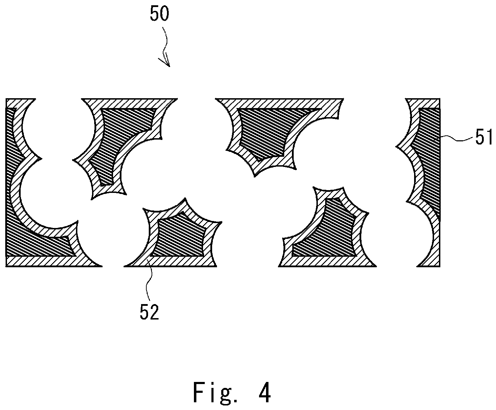

The catalyst having a layer including Ru and a phosphide compound on a porous body of metal or metal alloy will be described with reference to Fig. 4. Fig. 4 is a schematic cross-sectional view illustrating the present catalyst. The catalyst 50 illustrated in Fig. 4 has a layer 52 including Ru and metal phosphide on a porous body 51. The above layer structure achieves both durability and high activity.

The catalyst (III) has a layer including Ru and metal phosphide on a porous body. The composite layer of Ru and metal phosphide has higher durability and higher activity, for example, than the layer without a phosphide compound.

The catalyst (III) has a thickness of preferably 100 to 2,000 µm, and more preferably 200 to 1,600 µm. When the catalyst (III) has a thickness of 100 µm or more, the catalyst has excellent durability and activity.

Any metal may be used as the metal (M) constituting the porous body, and a metal capable of forming a phosphide is preferred from the viewpoint of the easiness in production of the catalyst. Specific examples of such metals include Fe, Cu, Ni and Ti, and Ni and Ti are preferred from the viewpoints of durability and activity of the catalyst. The metal constituting the porous body may be a single body or an alloy including two or more metals. The metal base material may also include other elements to the extent that the effect of the present invention is achieved.

The ratio of Ru in the catalyst (III) is preferably 0.1 to 40% by mass, and more preferably 0.5 to 30% by mass based on the total amount of the catalyst from the viewpoints of durability and activity.

The ratio of P in the catalyst (III) is preferably 10 to 50% by mass, and more preferably 20 to 30% by mass based on the total amount of the catalyst from the viewpoints of durability and activity.

It is preferable that the ratio between Ru and metal phosphide in the layer including Ru and metal phosphide be 9 : 1 to 5 : 5 in the mass ratio from the viewpoints of durability and activity.

In the catalyst (III), the layer including Ru and metal phosphide has a thickness of preferably 50 to 500 nm and more preferably 100 to 400 nm. When the layer including Ru and metal phosphide has a thickness of 50 nm or more, a catalyst with excellent durability and activity can be obtained. When the layer including Ru and metal phosphide has a thickness of 500 nm or less, the catalyst is sufficiently effective.

The thickness of the above layer may be measured by a scanning electron microscope (SEM) and based on mapping with an energy dispersive X-ray spectrometer (EDX, EDS). The composition of the above layer may be measured by X-ray photoelectron spectroscopy (XPS).

### (Method for producing catalyst (III))

Next, the method for producing the above catalyst (III) will be described. Examples of methods for producing the catalyst (III) include a method in which a porous body of metal or metal alloy is immersed in a Ru ion solution and the porous body after immersion is phosphorized. A layer including Ru and metal phosphide can be easily formed on a metal base material layer by this method, and the resulting catalyst has excellent durability and activity.

In the present method, first a desired porous body is prepared, and the porous body is immersed in a Ru ion solution. The Ru ion solution is prepared by dissolving a dissociative ruthenium compound in a solvent. Examples of ruthenium compounds include ruthenium chloride. The solvent usually includes water, and may also include other solvents. A solvent compatible with water is preferred as the other solvent, and examples thereof include methanol and ethanol. The concentration of iron ions in the solution is not particularly limited, and the solution has a concentration of, for example, 0.01 to 0.5 mol/l.

The time of immersion of the porous body is not particularly limited, and, for example, the time may be suitably adjusted in the range of 1 to 48 hours, and is preferably 12 to 36 hours. Long term immersion is likely to cause galvanic replacement between metal ions and Ru ions on the surface of the porous body, and this consequently improves durability of the resulting catalyst. The porous body after immersion may be dried according to need.

Next, the porous body after immersion is phosphorized (step (ii)). By phosphorizing with Ru ions attached to the surface of the base material, a layer including Ru and metal phosphide can be easily formed.

The method of phosphorization is not particularly limited, and a method in which the metal substrate is heated in the presence of a phosphorous compound is preferred. Specific examples thereof include a method in which a phosphorous compound and the porous body after immersion are placed in a furnace, and the two are heated in an inert gas atmosphere such as nitrogen gas.

When supplying inert gas to the furnace during heating, the phosphorous compound is disposed on the upstream and the porous body is disposed on the downstream to phosphorize them efficiently.

A phosphorous compound which decomposes at the heating temperature is preferred. Examples of phosphorus compound include sodium hypophosphite.

The heating temperature may be suitably adjusted in consideration of the decomposition temperature of the phosphorus compound and the like, and the heating temperature is for example, in the range of 300 to 600°C, and preferably 350 to 550°C.

The cathode 20 may also have the second diffusion layer 22 in addition to the cathode catalyst 21. The second diffusion layer 22 may be suitably selected from known gas diffusion layers. Examples thereof include a foaming metal layer such as nickel foam, and a porous carbon layer.

The present water electrolysis device may have a separator 13, 23 on the outer surface of the anode 10 and the cathode 20, respectively. For the material of the separator, the separator may not be coated with platinum or the like, and a separator made of carbon or stainless steel may be suitably selected and used. When the separators 13, 23 are conductive, the separator 13 may be used as the first main electrode and the separator 23 may be used as the second main electrode, and a power source 7 may be connected to the first main electrode and the second main electrode to apply voltage to the anode and the cathode.

The separators 13, 23 may have a gas flow path 14, 24. Oxygen generated in the anode 10 and hydrogen generated in the cathode 20 are each discharged through the gas flow paths 14, 24 and stored in a storage tank and the like.

The power source 7, which is not particularly limited, may be suitably selected from known direct current power sources. The present water electrolysis device is highly responsive to input power, and thus can be suitably used even for renewable energy sources with large fluctuations, such as solar power generation and wind power generation.

### [Fuel Cell]

The fuel cell of the present disclosure includes the present pore-filling membrane. The present pore-filling membrane can be suitably used for both solid alkaline fuel cells and polymer electrolyte fuel cells.

When the above electrolyte membrane is applied to solid alkaline fuel cells, an anion conductive electrolyte membrane is used as the above electrolyte membrane. The structure of the solid alkaline fuel cell may be a conventionally known structure.

For example, a membrane electrode assembly is formed by disposing a cathode on one side of the electrolyte membrane and an anode on the other side of the electrolyte membrane, then, oxygen is supplied to the cathode and fuel is supplied to the anode, subsequently, OH⁻ generated at the cathode is transferred to the anode through the electrolyte membrane to produce water, and electricity is thus generated.

The fuels can be suitably selected from conventionally known fuels, and examples thereof include, but are not limited to, hydrogen, methanol, ethanol, ethylene glycol, formate, hydrazine, sodium borohydride, and ammonia.

The followings are representative examples of the reactions at the respective electrodes when hydrogen, methanol, or formate is used as the fuel.

### -Fuel cell with hydrogen

Anode: 2OH⁻ + H₂ → 2H₂O

Cathode: O₂ + 2H₂O + 4e⁻ → 4OH⁻

### -Fuel cell with methanol

Anode: 6OH⁻ + CH₃OH → CO₂ + 5H₂O

Cathode: O₂ + 2H₂O + 4e⁻ → 4OH⁻

### -Fuel cell with formate

Anode: HCOO⁻ + 3OH⁻ → 2H₂O + CO₃²⁻ + 2e⁻

Cathode: O₂ + 2H₂O + 4e⁻ → 4OH⁻

When the above electrolyte polymer is applied to a polymer electrolyte fuel cell, a proton-conducting electrolyte membrane is used as the above electrolyte membrane. The structure of the polymer electrolyte fuel cell may be a conventionally known structure.

For example, a membrane electrode assembly is formed by disposing a cathode on one side of the electrolyte membrane and an anode on the other side of the electrolyte membrane, then, oxygen is supplied to the cathode and fuel is supplied to the anode, subsequently, protons generated at the anode is transferred to the anode through the electrolyte membrane to produce water, and electricity is thus generated.

The fuels can be suitably selected from conventionally known fuels, and specific examples thereof include the same fuels as exemplified in the above solid alkaline fuel cell.

The followings are representative examples of the reactions at the respective electrodes when hydrogen is used as a fuel.

Anode: H₂ → 2H⁺ + 2e⁻

Cathode: O₂ + 4H⁺ + 4e⁻ → 2H₂O

Fig. 5 is a schematic cross-sectional view illustrating an example of a key part of a polymer electrolyte fuel cell. The polymer electrolyte fuel cell 60 has a polymer electrolyte membrane 65, which is the above pore-filling membrane, an anode unit 70 to which fuel gas such as hydrogen is supplied, and a cell 68 having a cathode unit 80 to which oxygen is supplied, as well as an external circuit 67 and the like. Normally, the battery is configured by stacking the cells 6 according to the required output.

In anode unit 70, anode catalyst layer 71, diffusion layer 72, and separator 73 are disposed in this order from electrolyte membrane 65 side, and in cathode unit 80, cathode catalyst layer 81, diffusion layer 82, and separator 83 are disposed in this order from electrolyte membrane 5 side. The anode catalyst layer 71 and diffusion layer 72, and the cathode catalyst layer 81 and diffusion layer 82 are the electrodes, respectively. However, the electrodes need not necessarily use diffusion layers 72 and 82, as long as the reactant liquid or gas, the electrolyte, and the catalyst layer can be in contact at the same time. In other words, the catalyst layer for the electrode can be composed of only anode catalyst layer 71 and/or cathode catalyst layer 81. In the membrane electrode assembly 68, the electrolyte membrane 65 is disposed at least between the anode catalyst layer 71 and the cathode catalyst layer 81. The external circuit 67 is electrically connected to the anode catalyst layer 71 of the anode unit 70, the cathode catalyst layer 81 of the cathode unit 80, and the like.

In the polymer electrolyte fuel cell 60 configured as described above, in the anode unit 70, reducing gases such as hydrogen or reducing liquids such as methanol and formic acid are supplied to the anode catalyst layer 71 through the diffusion layer 72 from the gas flow path 74 of the separator 73. Meanwhile, in the cathode unit 80, oxidizing gases such as oxygen or air are supplied to the cathode catalyst layer 81 through the diffusion layer 82 from the gas flow path 84 of the separator 83.

In the case of the cation exchange type, where hydrogen gas is used as the reducing gas and oxygen gas as the oxidizing gas, an oxidation reaction of hydrogen occurs in the anode catalyst layer 71 and hydrogen ions and electrons are generated. The generated hydrogen ions move to the cathode catalyst layer 81 through the ion-conductive electrolyte membrane 65. Meanwhile, the generated electrons move to the cathode catalyst layer 81 through the external circuit 7. The hydrogen ions and electrons that reach the cathode unit 80 react with oxygen in the cathode catalyst layer 81 to produce water. In other words, the reduction reaction of oxygen occurs in the cathode catalyst layer 81. The water produced by the reduction reaction is discharged outside through the diffusion layer 82 of the cathode unit 80 or supplied to the polymer electrolyte membrane 65. Electricity is supplied to the outside through a series of these reactions. Platinum, iridium, ruthenium, palladium, gold, or alloys thereof, which are metals with a lower ionization tendency than hydrogen, are examples of suitable materials for the shell layer in the case of such cation exchange (acid type) fuel cells. Also, platinum, iridium, ruthenium, palladium, cobalt, nickel, iron, silver, gold, copper, or alloys thereof are examples of suitable materials for the core portion in this case.

Meanwhile, in the case of an anion exchange (alkaline type) fuel cell, water and oxygen are supplied to the cathode catalyst layer 81, and hydroxide ions are generated. The generated hydroxide ions move to the anode catalyst layer 71 through the ion-conductive electrolyte membrane 65. The hydroxide ions that reach the anode catalyst layer side then react with fuel to produce water and electrons. Hydrogen, formic acid, alcohol, and ammonia are examples of this fuel. The generated electrons move to the cathode catalyst layer 81 through the external circuit 7. Electricity is supplied to the outside through a series of these reactions. Metals selected from platinum, iridium, palladium, ruthenium, nickel, cobalt, iron, gold, silver, and copper or alloys thereof are examples of suitable materials for the shell layer in the case of such anion exchange (alkaline type) fuel cells. Also, platinum, iridium, ruthenium, palladium, cobalt, nickel, iron, gold, silver, copper, or alloys thereof are examples of suitable materials for the core portion in this case.

### Examples

Hereinafter the present invention will be described in more detail with reference to Examples. The present invention is not limited to those illustrations and may be suitably modified without departing from the scope and spirit of the present invention.

### [Production Example 1: Production of anion exchange polymer PFT-C10-TMA]

### (1) Synthesis of compound I

Sodium hydroxide (200 g) aqueous solution (600 mL) and n-tetrabutylammonium chloride (556 mg) were added to a two-necked flask, and the mixture was stirred under nitrogen. Then, a solution prepared separately by dissolving 2,7-dibromofluorene (20 mmol) in 1,10-dichlorodecane (200 mmol) while heating was added to this two-necked flask using a syringe.

The reaction was then carried out under nitrogen at 90°C for 90 minutes, and the resulting reaction solution was allowed to cool to room temperature (25°C). The organic phase in the cooled reaction solution was extracted with dichloromethane (300 mL) using a separating funnel and washed with 1M hydrochloric acid (50 mL) and water (200 mL × 2). The dichloromethane in the resulting organic phase was removed using an evaporator, and the unreacted 1,6-dichlorohexane was further removed at 90°C under reduced pressure. The residue obtained was applied to a silica gel column (developing solvent: hexane: chloroform = 9:1) to obtain the following compound I (13.6 mmol).

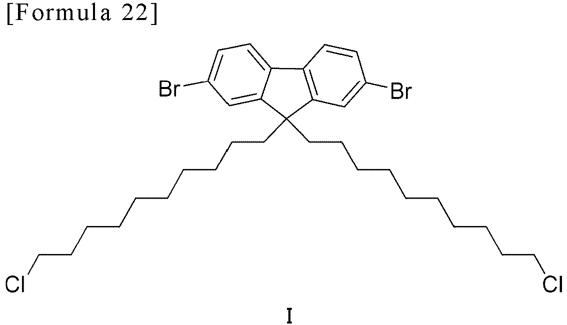

### (2) Synthesis of polymer I-Cl

Compound I (2 mmol), cesium carbonate (6 mmol), pivalic acid (2 mmol), tris(2-methoxyphenyl)phosphine (14 mg), and Pd₂(dba)₃·CHCl₃ complex (10.4 mg) were added to a two-necked flask, and further, dehydrated tetrahydrofuran (3 mL) was added and the mixture was stirred under nitrogen. Then, a solution prepared separately by dissolving tetrafluorophenylene (2.06 mmol) in tetrahydrofuran (1 mL) was added to the two-necked flask using a syringe to prevent air from entering as much as possible. These mixtures were allowed to react under nitrogen at room temperature (25°C) for 45 minutes and then at 95°C for 24 hours.

To the resulting reaction product (solids), 1M hydrochloric acid and chloroform were added, and after stirring at 40°C for 12 hours, the organic phase was extracted using a separating funnel. After washing the extracted organic phase with water, the liquid content in the resulting organic phase was removed using an evaporator and allowed to dry. The residue obtained was dissolved in chloroform and reprecipitated in methanol. The resulting precipitate was filtered to remove the liquid content, and then the solids were washed with hexane. Furthermore, the resulting solids were vacuum-dried to obtain the following polymer I-Cl.

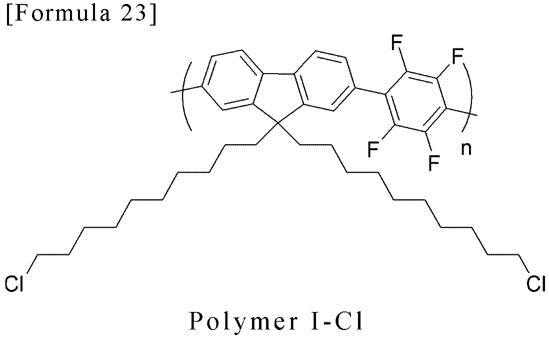

### (3) Synthesis of PFT-C10-TMA

Polymer I-Cl (200 mg) was dissolved in chlorobenzene (20 mL). A 25% by mass trimethylamine methanol solution (2 mL) was added to the obtained solution, and the mixture was stirred at 105°C for 6 hours. Dimethyl sulfoxide (10 mL) was then added and the mixture was stirred for another 6 hours. After removing most of the chlorobenzene in the reaction solution using an evaporator, dimethyl sulfoxide (20 mL) and 25% by mass trimethylamine methanol solution (3 mL) were added, and the mixture was stirred at 100°C for 3 hours to complete the reaction. Dimethyl sulfoxide in the resulting reaction solution was removed with an evaporator at 80°C and allowed to dry. Water was added to the dried residue, filtered, and water was added to the resulting solids, and then the mixture was stirred at 80°C. Thereafter, the mixture was cooled to room temperature (25°C), filtered, and the resulting solids were vacuum-dried to obtain the following polymer PFT-C10-TMA (203 mg).

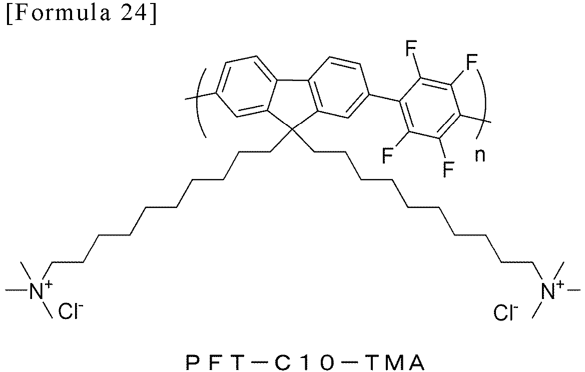

### [Production Example 2: Production of anode catalyst]

A commercially available nickel foam was uniformly pressed so that the thickness was 200 nm. The nickel foam was acid-treated with HCl and washed with ethanol and water. Next, the Ni foam was immersed in 1M KOH, and a nickel oxide layer including NiOOH was formed by oxidizing the surface of the nickel foam by applying 2.5 V vs RHE for 1 minute using a 10 cm² nickel foam counter electrode and a Hg/ HgO reference electrode to give an intermediate product.

The above intermediate product was immersed in an electrolyte solution including 25 mM Fe²⁺, (NH₄)₂SO₄, H₂SO₄ and water, whose pH was adjusted to 3 or less and which was deaerated with N₂. Fe was electrodeposited using a Pt counter electrode and an Ag/ AgCl reference electrode by chronoamperometry to give an Ni-OOH-Fe-Ni foam catalyst having a thickness of about 250 nm.

### [Production Example 3: Production of cathode catalyst]

About 0.2 mg of RuCl₃ was dissolved in 50 ml of deionized water to prepare a Ru ion solution. The acid-treated nickel foam was immersed in the Ru ion solution and the solution was kept for 24 hours to induce galvanic replacement between Ni ions on the surface of the base material and Ru ions. After the immersion, the nickel foam was dried in air to give an Ru-modified base material. High purity nitrogen was allowed to flow in a furnace at a flow rate of 60 SCCM, and sodium hypophosphite was provided on the upstream of the furnace and the Ru modified base material was provided on the downstream of the furnace. The temperature was increased at a rate of 3°C/ minute, and the base material was phosphorized by keeping it at 350°C for 4 hours to give an NiRu₂P-Ni foam catalyst.

### [Example 1: Preparation of pore-filling membrane]

A solution of anion exchange polymer PFT-C10-TMA obtained in Production Example 1 was prepared. An ultra-high molecular weight polyethylene porous base material with a porosity of 46% and a thickness of 25 µm was also prepared as the porous base material. After the above solution was permeated into the above porous base material, the solvent was removed to prepare a pore-filling membrane filled with PFT-C10-TMA.

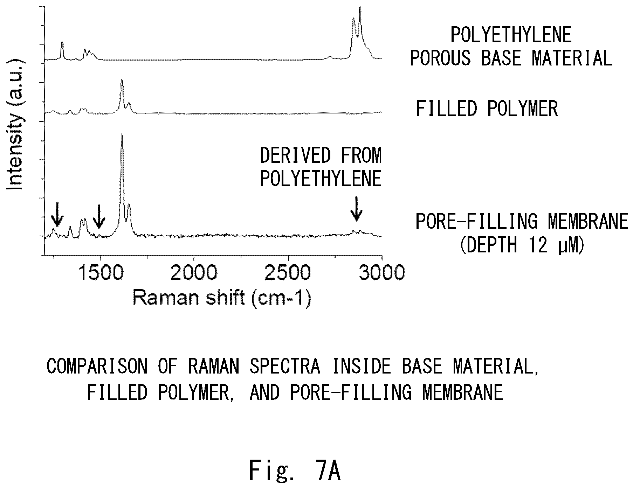

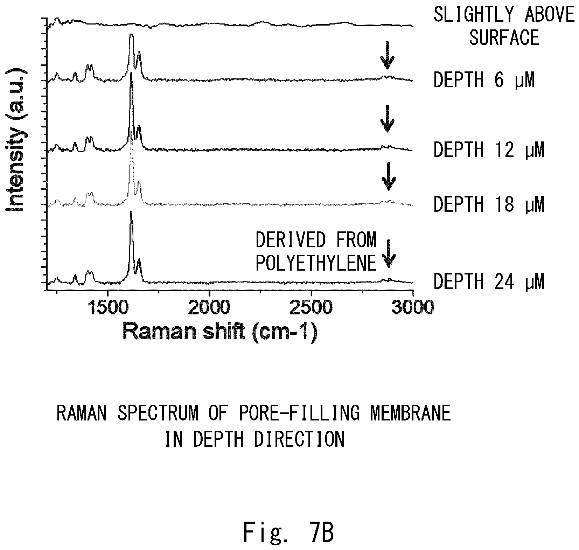

The filling of the anion exchange polymer PFT-C10-TMA in the pores was confirmed by Raman analysis. The results of Raman analysis are shown in Figs. 7a and 7b. Fig. 7A shows, from top to bottom, the Raman spectra of the polyethylene porous base material, the filled polymer (PFT-C10-TMA), and the pore-filling membrane (12 µm depth). As shown in these comparisons, both the spectrum derived from the base material and the spectrum derived from the polymer are detected at a depth of 12 µm in the pore-filling membrane, indicating that the inside of the porous base material is filled with polymer. Fig. 7B shows the Raman spectrum of the pore-filling membrane in the depth direction. As shown in Fig. 7B, spectra derived from the polymer were detected at all measurement points, indicating that the polymer is filled almost uniformly in the depth direction of the porous base material.

### [Example 2: Preparation of pore-filling membrane]

A pore-filling membrane was prepared in the same manner as in Example 1 except that the pore base material was changed to a polytetrafluoroethylene (PTFE) pore base material with a porosity of 70% and a thickness of 25 µm in Example 1. Raman analysis was performed as in Example 1, and it was confirmed that the inside of the porous base material was also filled with polymer.

### [Comparative Example 1: Preparation of pore-filling membrane]

A pore-filling membrane was prepared in the same manner as in Example 1 except that the porous base material was changed to a polyimide porous base material with a porosity of 60% and a thickness of 20 µm in Example 1. Raman analysis was performed as in Example 1, and it was shown that the inside of the porous base material could not be filled with polymer.

### <Water electrolysis test>

A membrane electrode assembly was prepared using the pore-filling membrane of Production Example 2 as the electrolyte membrane, the Ni-OOH-Fe-Ni foam catalyst of Production Example 2 as the anode catalyst, and the NiRu₂P-Ni foam catalyst of Example 3 as the cathode catalyst. Water electrolysis tests were conducted at 80°C with 1M KOH solution flowing on both sides of the anode and cathode. The test results are shown in Fig. 6. As shown in Fig. 6, the water electrolysis device using the pore-filling membrane of Example 1 was able to conduct water electrolysis with high efficiency.

As described above, the present pore-filling membrane has the following features.

The present pore-filling membrane, in which polyarylene polymer is filled into pores of the porous base material, has excellent mechanical strength and chemical durability equivalent or superior to that of a membrane deposited with polyarylene polymer. Pore-filling membranes with excellent ionic conductivity can be obtained by using polyarylene polymers having the structural unit represented by the general formula (1). The use of a polyolefin porous base material further improves chemical durability and makes it easier to fill the pores with polyarylene polymer. By using such pore-filling membranes, fuel cells and electrolysis devices with excellent durability can be obtained.

This application claims priority to Japanese Patent Application No. 2022-082500 filed on May 19, 2022, which are herein incorporated by reference in their entirety.

### Reference Signs List

1 WATER ELECTROLYSIS DEVICE, 5 ELECTROLYTE MEMBRANE (PORE-FILLING MEMBRANE), 6 CELL, 7 POWER SOURCE, 8 MEMBRANE ELECTRODE ASSEMBLY, 10 ANODE (ANODE ELECTRODE), 11 ANODE CATALYST, 12 FIRST DIFFUSION LAYER, 13 SEPARATOR, 14 GAS FLOW PATH, 20 CATHODE (CATHODE ELECTRODE), 21 CATHODE CATALYST, 22 SECOND DIFFUSION LAYER, 23 SEPARATOR, 24 GAS FLOW PATH, 30, 40 ANODE CATALYST, 31, 41 NICKEL FOAM, 32 NICKEL OXIDE LAYER, 33 LAYER INCLUDING NiFe, 42 PHOSPHIDE LAYER, 50 CATHODE CATALYST, 51 POROUS BODY OF METAL OR METAL ALLOY, 52 LAYER INCLUDING Ru AND METAL PHOSPHIDE, 60 FUEL CELL 65 ELECTROLYTE MEMBRANE (PORE-FILLING MEMBRANE), 66 CELL, 67 EXTERNAL CIRCUIT, 68 MEMBRANE ELECTRODE ASSEMBLY, 70 ANODE UNIT, 71 ANODE CATALYST LAYER, 72 DIFFUSION LAYER, 73 SEPARATOR, 74 GAS FLOW PATH, 80 CATHODE UNIT, 81 CATHODE CATALYST LAYER, 83 SEPARATOR, 84 GAS FLOW PATH

## Claims

1. A pore-filling membrane having a porous base material and a polyarylene polymer,
wherein the polyarylene polymer is filled into pores of the porous base material.

2. The pore-filling membrane according to claim 1, wherein the polyarylene polymer has a structural unit represented by the following general formula (1): 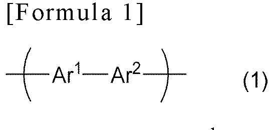
wherein Ar¹ is an aromatic group having an ion exchange group, or a group in which aromatic rings having ion exchange groups are linked through a single bond, and a plurality of Ar¹s may be the same or different,
Ar² is an aromatic group having no ion exchange group, or a group in which two or more aromatic rings having no ion exchange group are linked through a single bond or a spiro atom, and a plurality of Ar²s may be the same or different, and
the aromatic rings of Ar¹ and the aromatic rings of Ar² are linked through a single bond.

3. The pore-filling membrane according to claim 1 or 2, wherein the porous base material is a polyolefin porous base material.

4. A pore-filling membrane according to claim 3, wherein the polyolefin porous base material is a polyethylene porous base material, a polypropylene porous base material, or a polytetrafluoroethylene porous base material.

5. A fuel cell comprising the pore-filling membrane according to claim 1 or 2.

6. An electrolysis device comprising the pore-filling membrane according to claim 1 or 2.
